# EUROPEAN PATENT APPLICATION

(11) **EP 1 106 343 A1**
(43) Date of publication of application: **13.06.2001**
(21) Application number: 99830764.9
(22) Date of filing: 07.12.1999
(51) Int. Cl.: B32B 17/10, C03C 27/12

(54) **Laminated glazing panel**

(71) Applicant: Societa' Italiana Vetro - SIV - S.p.A., 66050 San Salvo CHI (IT)
(72) Inventor: Barattucci, Nino, 66054 Vasto, CH (IT); Bolognese, Litterio, 66054 Vasto, CH (IT)
(74) Representative: Bazzichelli, Alfredo

(57) **Abstract**

A laminated glazing panel comprising at least two glass sheets (27,29) and at least one plastics (preferably PVB) sheet (31) sandwiched between the glass sheets, the plastics sheet (31) comprising a substantially opaque strip portion (33) extending along an edge of the plastics sheet. Usually one of the glass sheets has an opaque obscuration band (37) extending along at least one edge leaving a thin clear area between the edge of the panel and the obscuration band (37). The opaque strip (37) preferably covers the thin clear area to protect adhesives from UV degradation from sunlight and for cosmetics reasons. The glazing panel will usually be a vehicle window.

## Description

The present invention relates to laminated glazing panels and in particular it relates to laminated vehicle windows.

It is common practice to provide laminated glazing panels, especially laminated vehicle windows, with an obscuration band around all or part of the periphery of the panel to protect adhesives used to glaze the panels from exposure to UV radiation in sunlight and consequent degradation and also to obscure cosmetic defects. The cosmetic defects may result from grinding of the edge of a glass sheet or be caused by uneveness in the edge of the plastics sheet.

Laminated glazing panels usually comprise two glass sheets and a plastics sheet (usually of polyvinylbutyral) sandwiched between the glass sheets. The plastics sheet is often referred to as an interlayer.

Usually, obscuration bands are applied to a surface of one of the glass sheets, using a screen printing process, as a ceramic ink comprising an inorganic pigment dispersed in a glass frit. On heating the glass sheet to a high temperature, the ink fires into the glass sheet forming a durable ceramic layer. Printed obscuration bands, however, have disadvantages. As stated in GB 2,264,452 B, printing of the obscuration bands may have deleterious effects on the production and performance of laminated vehicle windows. GB 2,264,452 B proposes to solve these problems by forming an obscuration band in a laminated vehicle window by incorporating one or more separate localised areas of obscuring compatible material in the interlayer where obscuration is required. Unfortunately, the obscuration bands described in GB 2,264,452 B have a sharp edge: there is no fade-out pattern between the edge of the obscuration band and the clear portion of the window. This sharp edge may be distracting to the eye.

A further disadvantage of printing an obscuration band is that a thin clear area of unprinted, and thus unobscured, glass may be left between the extreme edge of the glass sheet and the obscuration band. This has not previously been a problem because, for mounting into a vehicle, the edge of the glazing panel is usually surrounded by a black, polymeric trim which covers the thin clear area. However, in new designs of vehicle glazing a trim is not used and, consequently, the thin clear area is not covered. This may have the consequence of UV degradation of glazing adhesives on exposure of the glazing panel to sunlight, and it may allow cosmetic defects at the edge of the glazing panel to be seen.

We have discovered that the above-mentioned problems may be alleviated by using a plastics sheet including a substantially opaque portion as the interlayer in a laminated glazing panel.

The present invention accordingly provides a laminated glazing panel comprising at least two glass sheets and at least one plastics sheet sandwiched between and co-extensive with the two glass sheets characterised in that the plastics sheet comprises a substantially clear portion and a substantially opaque strip portion integral with the clear portion and extending along at least one edge of the periphery of the plastics sheet.

The substantially opaque strip portion of the plastics sheets is integral with the clear portion which means that the opaque strip portion and the clear portion form a whole.

In the usual embodiment of the invention at least one of the glass sheets has an obscuration band applied to at least one surface thereof and extending along at least one edge of the periphery of the glass sheet. Usually, there is a thin clear area between the edge of the glazing panel and the obscuration band, and preferably the opaque strip portion of the plastics sheet covers the thin clear area between the edge of the glazing panel and the obscuration band. This is advantageous because the edge of the glazing panel will then be obscured, blocking UV irradiation which may degrade adhesive used to glaze the glazing panel, and obscuring any cosmetic defects at the edge.

Where the opaque strip portion of the plastics sheet covers the thin clear area between the edge of the glazing panel and the obscuration band, it is preferable if the obscuration band is wider than the opaque strip portion of the plastics sheet (i.e. the opaque strip portion of the plastics sheet is narrower than the obscuration band). The opaque strip portion of the plastics sheet is preferably less than 10 cm wide, more preferably less than 3 cm wide. Preferably the opaque strip portion of the plastics sheet and the obscuration band are colour matched.

In any embodiment of the invention it is preferred that the opaque strip portion of the plastics sheet is evenly coloured along its length and across its width. Preferably the opaque strip portion of the plastics sheet is of a dark, more preferably a very dark colour. Most preferably the opaque strip portion of the plastics sheet is black.

The plastics sheet may be formed of any suitable material, for example polymers such as polyvinyl chloride or polyurethane. However, preferably, the plastics sheet comprises polyvinyl butyral (PVB).

The plastics sheet may comprise a single layer of a polymeric material, but it may be desirable that the plastics sheet is a laminate comprising a multiplicity of layers. Thus, the plastics sheet may comprise a laminated plastics sheet having a multiplicity of layers, said layers comprising in sequence, a layer of polyvinyl butyral, a layer of polyethylene terephthalate (PET) and a layer of polyvinyl butyral (PVB). This is advantageous because the laminated glazing panel may then be conveniently provided with solar control properties by, for example, depositing a solar control coating on the PET layer. Thus, preferably, the layer of polyethylene terephthalate has an infra-red reflective coating deposited thereon. The infra-red reflecting coating will usually comprise thin layers of a reflective metal (for example silver) and anti-reflection layers of dielectric materials (for example zinc oxide or tin oxide).

Laminated glazing panels of the present invention are useful as laminated vehicle windows (in particular as laminated vehicle windscreens). Thus, in a preferred embodiment, the present invention provides a laminated vehicle window comprising two glass sheets and at least one plastics sheet sandwiched between and co-extensive with the two glass sheets, wherein at least one of the glass sheets has a substantially opaque ceramic obscuration band applied to at least one surface thereof and extending along at least one edge of the periphery of the glass sheet and wherein there is a thin clear area between the edge of the glazing panel and the ceramic obscuration band and wherein said plastics sheet comprises a substantially clear portion and a substantially opaque strip portion integral with the clear portion and extending along at least one edge of the periphery of the plastics sheet and wherein said opaque strip portion covers the thin clear area between the edge of the glazing panel and the ceramic obscuration band.

In a second aspect, the present invention provides a method of producing a laminated glazing panel which comprises providing at least two glass sheets and at least one plastics sheet comprising a substantially clear portion and a substantially opaque strip portion integral with the clear portion and extending along at least one edge of the periphery of the plastics sheet, sandwiching the plastics sheet between the two glass sheets, and laminating the glass sheets and the plastics sheet. Preferably, the plastics sheet comprising the substantially clear portion and the substantially opaque strip portion is formed by co-extrusion.

In a further aspect the present invention provides a laminated vehicle window comprising a multiplicity of plies including at least two glass plies and at least one plastics ply wherein one ply has a first obscuration means in the form of a substantially opaque band applied to one surface and extending along at least one edge of the periphery of the ply, characterised in that a second obscuration means in the form of a substantially opaque band having substantially uniform opacity is applied to one surface and extends along at least one edge of the periphery of a different ply.

Some illustrative embodiments of the invention will now be disclosed by way of example by reference to the accompanying drawings in which:
Figure 1 illustrates a schematic plan view of a laminated vehicle windscreen known in the prior art.
Figure 2 illustrates a section on A-A of Figure 1.
Figure 3 illustrates a schematic plan view of a laminated vehicle windscreen according to the invention.
Figure 4 illustrates a section on B-B of Figure 3.

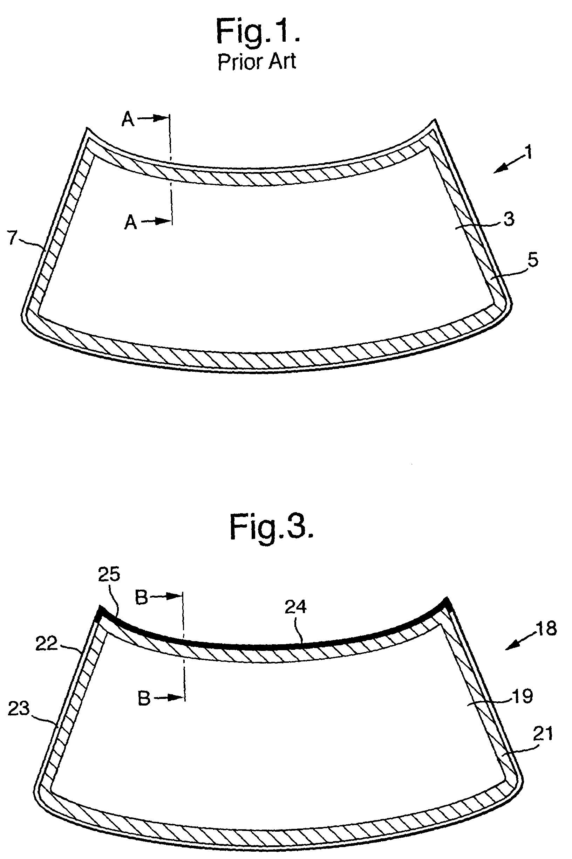

Referring to Figure 1, a known laminated vehicle windscreen 1 comprises an outer glass sheet 3, a polyvinyl butyral sheet (not shown) and an inner glass sheet (not shown). Around the four edges of the periphery of the windscreen there is provided an opaque ceramic obscuration band 5. The ceramic obscuration band 5 is applied as a ceramic ink to the outer surfaces of the outer glass sheet 3 by a screen printing process and fired by heating at high temperature, before assembly of the laminated windscreen 1. The equipment used to apply the ceramic obscuration band is such that a thin clear area of unobscured laminate 7 is left around the periphery of the windscreen between the edge of the windscreen and the ceramic obscuration band.

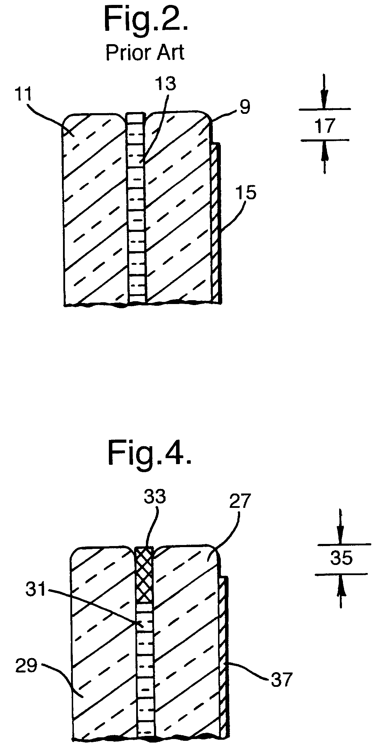

Referring to Figure 2, in section the known windscreen is seen to comprise an outer glass sheet 9 and an inner glass sheet 11 . Sandwiched between the glass sheets is a polyvinyl butyral sheet 13. An opaque ceramic obscuration band 15 is provided on the outer surface of the outer glass sheet 9 leaving a thin clear area 17 of unobscured laminate at the edge of the windscreen.

Referring to Figure 3, a laminated vehicle windscreen 18 according to the invention comprises an outer glass sheet 19, a polyvinyl butyral sheet (not shown) and an inner glass sheet (not shown). Around the four edges of the periphery of the windscreen there is provided an opaque ceramic obscuration band 21 and there is a thin clear area of unobscured laminate 23. The polyvinyl butyral sheet (not shown) is provided with an opaque strip portion 25 of 10 cm width integral with the plastics sheet and extending along the top edge 24 of the periphery 22 of the windscreen covering the thin clear area 23 along the top edge of the windscreen. The strip portion 25 and the ceramic obscuration band 21 are colour matched and black in colour.

Referring to Figure 4, in section the windscreen according to the invention is seen to comprise an outer glass sheet 27 (e.g. 2 mm thick) and an inner glass sheet 29 (e.g. 1.6 mm thick). Sandwiched between the glass sheets is a polyvinyl butyral sheet 31 (e.g. 0.8 mm thick). An opaque ceramic obscuration band 37 is provided on the outer surface of the outer glass sheet 27 leaving a thin clear area 35 of unobscured laminate at the edge of the windscreen. The top edge of the polyvinyl butyral sheet 31 is provided with an opaque, black strip portion 33 which covers and obscures the thin clear area 35.

The thicknesses of the glass sheets and polyvinyl butyral (PVB) sheet are not critical. In other designs the outer or inner glass can, for example, be in the range 1,6 mm to 3mm and the PVB in a range 0.38mm to 1.52 mm. The PVB sheet can also be replaced with a sheet of other plastics material for example polyvinyl chloride or potyurethane, with thickness typically being in the same range as for the PVB. In other examples it can be possible to incorporate layers of other plastics materials such as polyethylene terephthalate (PET) into the laminate, sandwiching this PET between two sheets of PVB. This PET sheet may incorporate a reflective solar control film.

A laminated vehicle windscreen according to the invention is produced in the following manner. Two glass sheets (alternatively referred to as glass plies) of the same size and shape are cut. A black ceramic obscuration band is applied to the innermost surface (that is the surface intended to be on the interior of the vehicle into which the windscreen is to be glazed) of the inner glass sheet using a standard screen printing method for windscreens and Cerdec ink IR 14205 (manufactured by and obtained from Degussa). This ink is typical of a wide variety of products available in the industry to perform this function. This printing helps to improve the aesthetic appearance of the manufactured article and to mask all those items that preferably are not visible (for example, electric connections and the structure of the vehicle) after assembling of the windscreen onto the car.

As a result of a limitation of the screen printing application process commonly used by the industry to apply this ink, it usually occurs that the ink does not extend all the way to the edge of the glass. The edge of the printed area is typically one to two millimetres from the edge of the glass. When the two glasses are laminated with the clear PVB it is possible to see a thin clear area along the edge of the glazing.

After printing, the glass sheets are heated to a temperature of around 650°C and shaped, using a process well known in the art. The high temperatures for shaping fire the ceramic ink into the glass surface. The thickness of the ceramic obscuration band after heating is about 16 to 18 microns, but may be between about 10 and 40 microns depending on the specific ink type used.

The PVB used to laminated the glass sheets was obtained from HT Troplast (Cologne, Germany) in the form of a roll having a width of about 85 cm and a thickness of about 0.8 mm. Approximately 75 cm of the width of the PVB roll was clear PVB and the top 10 cm was black and substantially opaque. The PVB was produced by a co-extrusion process in a similar way to that used to produce blue or green transparent shade bands. The PVB sheet used for lamination was cut from the roll so that the black band was at the top of the sheet. Before lamination the cut sheet of PVB is preferably shaped so that the black band in the PVB follows the curvature of the top edge of the glass. This shaping is preferably sufficiently precise so as to ensure that the strip portion of the PVB does not extend over the area of the glass that is intended to be unobscured but does covers the glass edge.

The two glass sheets (the outer 2 mm thick and the inner 1.6 mm thick) were laminated with the sheet of PVB in an autoclave using sets of temperature and pressure conditions which are well know in the art. These conditions may be altered to meet the particular requirements of the alternate materials described above.

## Claims

1. A laminated glazing panel comprising at least two glass sheets and at least one plastics sheet sandwiched between and co-extensive with the two glass sheets characterised in that the plastics sheet comprises a substantially clear portion and a substantially opaque strip portion integral with the clear portion and extending along at least one edge of the periphery of the plastics sheet.

2. A laminated glazing panel as claimed in claim 1 wherein at least one of the glass sheets has an obscuration band applied to at least one surface thereof and extending along at least one edge of the periphery of the glass sheet.

3. A laminated glazing panel as claimed in claim 2 wherein there is a thin clear area between the edge of the glazing panel and the obscuration band.

4. A laminated glazing panel as claimed in claim 3 wherein the opaque strip portion of the plastics sheet covers the thin clear area between the edge of the glazing panel and the obscuration band.

5. A laminated glazing panel as claimed in any one of claims 2 to 4 wherein the obscuration band is wider than the opaque strip portion of the plastics sheet.

6. A laminated glazing panel as claimed in any one of claims 2 to 5 wherein the opaque strip portion of the plastics sheet is less than 10 cm wide.

7. A laminated glazing panel as claimed in any one of claims 2 to 6 wherein the opaque strip portion of the plastics sheet and the obscuration band are colour-matched.

8. A laminated glazing panel as claimed in any one of the preceding claims wherein the opaque strip portion of the plastics sheet is evenly coloured along its length and across its width.

9. A laminated glazing panel as claimed in any one of the preceding claims wherein the opaque strip portion of the plastic sheet is black.

10. A laminated glazing panel as claimed in any one of the preceding claims wherein the plastic sheet comprises polyvinyl butyral.

11. A laminated glazing panel as claimed in any of the of the preceding claims wherein the plastics sheet comprises a laminated plastics sheet having a multiplicity of layers, said layers comprising, in sequence, a layer of polyvinyl butyral, a layer of polyethylene terephthalate and a layer of polyvinyl butyral.

12. A laminated glazing panel as claimed in claim 11 wherein the layer of polyethylene terephthalate has an infra-red reflective coating deposited thereon.

13. A laminated vehicle window comprising a laminated glazing panel as claimed in any one of the preceding claims.

14. A laminated vehicle window comprising two glass sheets and at least one plastics sheet sandwiched between and co-extensive with the two glass sheets, wherein at least one of the glass sheets has a substantially opaque ceramic obscuration band applied to at least one surface thereof and extending along at least one edge of the periphery of the glass sheet and wherein there is a thin clear area between the edge of the glazing panel and the ceramic obscuration band and wherein sad plastics sheet comprises a substantially clear portion and a substantially opaque strip portion integral with the clear portion and extending along at least one edge of the periphery of the plastics sheet and wherein said opaque strip portion covers the thin clear area between the edge of the glazing panel and the ceramic obscuration band.

15. A method of producing a laminated glazing panel which comprises providing at least two glass sheets and at least one plastics sheet comprising a substantially clear portion and a substantially opaque strip portion integral with the clear portion and extending along at least one edge of the periphery of the plastics sheet, sandwiching the plastics sheet between the two glass sheets, and laminating the glass sheets and the plastics sheet.

16. A method as claimed in claim 15 wherein the plastics sheet comprising the substantially clear portion and the substantially opaque strip portion is farmed by co-extrusion.

17. A laminated vehicle window comprising a multiplicity of plies including at least two glass plies and at least one plastics ply wherein one ply has a first obscuration means in the form of a substantially opaque band applied to one surface and extending along at least one edge of the periphery of the ply, characterised in that a second obscuration means in the form of a substantially opaque band having substantially uniform opacity is applied to one surface and extends along at least one edge of the periphery of a different ply.
